# EUROPEAN PATENT APPLICATION

(11) **EP 2 868 244 A2**
(43) Date of publication of application: **06.05.2015**
(21) Application number: 14188786.9
(22) Date of filing: 14.10.2014
(51) Int. Cl.: A47J 36/04, A47J 37/00, A47J 27/00, C09D 5/28, B05D 5/06, B05D 7/14, B05D 7/24, B05D 1/02, C09D 179/08, C09D 5/00, B05D 3/00

(54) **Speckled kitchen utensil and manufacturing method thereof**

(30) Priority: 16.10.2013 KR 20130123549; 03.03.2014 KR 20140025029
(71) Applicant: Kim, Ryong, Seoul (KR)
(72) Inventor: Kim, Ryong, Seoul (KR)
(74) Representative: Grünecker Patent- und Rechtsanwälte PartG mbB

(57) **Abstract**

This invention relates to a speckled kitchen utensil and a manufacturing method thereof, wherein the surface of the kitchen utensil is coated with a primer coating layer including polyamideimide in NMP, water, a PTFE dispersion, a carbon black dispersion and a silica dispersion, and a color coating layer is formed by spot spraying on the entire surface of the primer coating layer.

## Description

### BACKGROUND OF THE INVENTION

### 1. Field of the Invention

The present invention relates to a speckled kitchen utensil and a manufacturing method thereof, and more particularly, to a speckled kitchen utensil and a manufacturing method thereof, wherein the entire surface of the kitchen utensil is formed with a color coating using a spot spraying process at low pressure to exhibit a speckled appearance.

### 2. Description of the Related Art

Generally, a cooking utensil refers to any vessel in which food is cooked, such as a frying pan, a pot, etc.

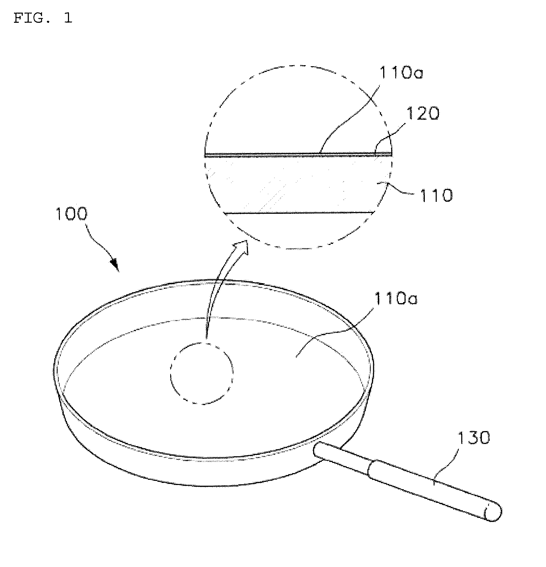

FIG. 1 illustrates a conventional cooking utensil.

With reference to FIG. 1, a conventional cooking utensil is described below.

As illustrated in FIG. 1, the cooking utensil 100 includes a body for cooking food and a handle 130. Provided on the cooking surface 110a of the body is at least one protective film layer so as to prevent adhesion of food and easily remove food residue upon washing.

Typically, a cooking utensil such as a frying pan or a pot for cooking food has a body having a bowl shape and a handle which is formed at either or both sides of the body or is removably attached to facilitate handling of the body, wherein a protective film layer is formed on the surface of the cooking utensil.

As the demand for the decorative patterns and designs of kitchen utensils has become increasingly diversified according to the aesthetic preferences of buyers, many attempts have been made to form an image film layer to impart the decorative patterns and designs to the surface of kitchen utensils. For example, a special design is created on the surface of a pot using a transfer paper, thereby forming various patterns on the surface of the kitchen utensil.

However, manufacturing of the cooking utensil using the conventional method has the following problems.

First, because a conventional cooking utensil has a crude and rudimentary shape and a relatively dark color on the cooking surface thereof, limitations are imposed on satisfying the aesthetic buying preferences of female buyers and users and enhancing the commercial properties of kitchen utensils.

Second, the lateral side of a conventional cooking utensil has a vertically rounded surface, making it difficult to manufacture a transfer sheet having an ornate design or pattern corresponding thereto, and thus a fine image coating layer having a new color or design cannot easily be formed on the lateral side thereof.

Third, when a kitchen product is manufactured using a conventional method of manufacturing a cooking utensil, a fine image cannot be formed and the rate of defects may increase, undesirably remarkably lowering productivity. Further, even when the image coating layer is formed, the image may be formed only on a limited region of the surface of the cooking utensil and thus improvements in the quality of product appearance are limited.

Finally, because a pigment is sprayed at high pressure in a conventional method of manufacturing a cooking utensil, high scattering loss may occur and the coating thickness cannot be selectively adjusted.

In particular, the image is displayed only on a portion of the surface of the kitchen utensil, undesirably limiting an improvement in the outer appearance of the kitchen utensil.

### SUMMARY OF THE INVENTION

Accordingly, the present invention has been made keeping in mind the above problems occurring in the prior art, and an object of the present invention is to provide a speckled kitchen utensil and a manufacturing method thereof, wherein the surface of any one selected from among a primer coating layer, a mid coating layer and a top coating layer which are selectively applied on the surface of the kitchen utensil may be formed with a speckled color coating using a spot spraying process at low pressure.

Another object of the present invention is to provide a speckled kitchen utensil and a manufacturing method thereof, wherein a plurality of color coating layers may be formed on the surface of the kitchen utensil, and respective color coating layers may be formed by applying coating solutions having different colors.

A further object of the present invention is to provide a speckled kitchen utensil and a manufacturing method thereof, wherein at least one color coating layer applied on the surface of the kitchen utensil may be formed by carrying out spot spraying at low pressure using coating solutions having different colors.

In order to accomplish the above objects, the present invention provides a speckled kitchen utensil, comprising: a primer coating layer formed on a surface of the kitchen utensil and comprising polyamideimide in NMP, water, a PTFE dispersion, a carbon black dispersion, and a silica dispersion; and a color coating layer formed by spot spraying on an entire surface of the primer coating layer, wherein a coating solution of the primer coating layer comprises 63 ∼ 74 wt% of polyamideimide in NMP, 3 ∼ 8 wt% of water, 14 ∼ 20 wt% of the PTFE dispersion, 2 ∼ 4 wt% of the carbon black dispersion, and 6 ∼ 10 wt% of the silica dispersion, and a coating solution of the color coating layer comprises 86 ∼ 92 wt% of a PTFE dispersion, 5 ∼ 7 wt% of water, 0.5 ∼ 1.5 wt% of an aromatic hydrocarbon, 0.2 ∼ 0.5 wt% of triethylamine, 0.2 ∼ 0.5 wt% of oleic acid, 0.1 ∼ 0.4 wt% of a surfactant, and 1.5 ∼ 3.5 wt% of an inorganic pigment.

In addition, the present invention provides a speckled kitchen utensil, comprising: a primer coating layer formed on a surface of the kitchen utensil and comprising polyamideimide in NMP, water, a PTFE dispersion, a carbon black dispersion, and a silica dispersion; a color coating layer formed by spot spraying on an entire surface of the primer coating layer; and a top coating layer formed on a surface of the color coating layer and comprising a PTFE dispersion, water, an aromatic hydrocarbon, triethylamine, oleic acid, a surfactant, and mica, wherein a coating solution of the primer coating layer comprises 63 ∼ 74 wt% of polyamideimide in NMP, 3 ∼ 8 wt% of water, 14 ∼ 20 wt% of the PTFE dispersion, 2 ∼ 4 wt% of the carbon black dispersion, and 6 ∼ 10 wt% of the silica dispersion, a coating solution of the color coating layer comprises 86 - 92 wt% of a PTFE dispersion, 5 ∼ 7 wt% of water, 0.5 - 1.5 wt% of an aromatic hydrocarbon, 0.2 - 0.5 wt% of triethylamine, 0.2 - 0.5 wt% of oleic acid, 0.1 - 0.4 wt% of a surfactant, and 1.5 - 3.5 wt% of an inorganic pigment, and a coating solution of the top coating layer comprises 86 ∼ 92 wt% of the PTFE dispersion, 5 ∼ 7 wt% of water, 0.5 ∼ 1.5 wt% of the aromatic hydrocarbon, 0.2 ∼ 0.5 wt% of triethylamine, 0.2 ∼ 0.5 wt% of oleic acid, 0.1 ∼ 0.4 wt% of the surfactant, and 1.5 ∼ 3.5 wt% of mica.

In addition, the present invention provides a speckled kitchen utensil, comprising: a primer coating layer formed on a surface of the kitchen utensil and comprising polyamideimide in NMP, water, a PTFE dispersion, a carbon black dispersion, and a silica dispersion; a mid coating layer formed on a surface of the primer coating layer and comprising a PTFE dispersion, water, an aromatic hydrocarbon, triethylamine, oleic acid, a surfactant, a carbon black dispersion, and mica; a color coating layer formed by spot spraying on an entire surface of the mid coating layer; and a top coating layer formed on a surface of the color coating layer and comprising a PTFE dispersion, water, an aromatic hydrocarbon, triethylamine, oleic acid, a surfactant, and mica, wherein a coating solution of the primer coating layer comprises 63 ∼ 74 wt% of polyamideimide in NMP, 3 ∼ 8 wt% of water, 14 ∼ 20 wt% of the PTFE dispersion, 2 ∼ 4 wt% of the carbon black dispersion, and 6 ∼ 10 wt% of the silica dispersion, a coating solution of the mid coating layer comprises 78 - 86 wt% of the PTFE dispersion, 8 ∼ 15 wt% of water, 2.2 - 4.4 wt% of the aromatic hydrocarbon, 0.3 ∼ 0.6 wt% of triethylamine, 0.3 ∼ 0.6 wt% of oleic acid, 0.2 ∼ 0.4 wt% of the surfactant, 2 ∼ 4 wt% of the carbon black dispersion, and 1 ∼ 2 wt% of mica, a coating solution of the color coating layer comprises 86 ∼ 92 wt% of a PTFE dispersion, 5 ∼ 7 wt% of water, 0.5 ∼ 1.5 wt% of an aromatic hydrocarbon, 0.2 ∼ 0.5 wt% of triethylamine, 0.2 ∼ 0.5 wt% of oleic acid, 0.1 ∼ 0.4 wt% of a surfactant, and 1.5 ∼ 3.5 wt% of an inorganic pigment, and a coating solution of the top coating layer comprises 86 ∼ 92 wt% of the PTFE dispersion, 5 ∼ 7 wt% of water, 0.5 ∼ 1.5 wt% of the aromatic hydrocarbon, 0.2 ∼ 0.5 wt% of triethylamine, 0.2 ∼ 0.5 wt% of oleic acid, 0.1 ∼ 0.4 wt% of the surfactant, and 1.5 ∼ 3.5 wt% of mica.

In the present invention, the color coating layer may exhibit various colors by simultaneous spot spraying at low pressure using a plurality of nozzles having different colors.

In addition, the present invention provides a speckled kitchen utensil, comprising: a ceramic primer coating layer formed on a surface of the kitchen utensil and comprising a silane-based binder and a catalyst; a color coating layer formed by spot spraying on an entire surface of the ceramic primer coating layer; and a ceramic top coating layer formed on a surface of the color coating layer and comprising a silane-based binder, a catalyst, and an inorganic pigment dispersion, wherein the ceramic primer coating layer comprises 97 ∼ 99.99 wt% of the silane-based binder, and 0.01 ∼ 3 wt% of the catalyst, a coating solution of the color coating layer is a silane-based hot paint comprising 96.2 ∼ 98.49 wt% of a silane-based binder, 1.5 ∼ 3.5 wt% of a color pigment, and 0.01 ∼ 0.3 wt% of a solvent, and the ceramic top coating layer comprises 40 ∼ 90 wt% of the silane-based binder, 9 ∼ 40 wt% of the catalyst, and 1 ∼ 20 wt% of the inorganic pigment dispersion.

In the present invention, the silane-based binder may be at least one selected from among trimethoxysilane, methyltrimethoxysilane, and tetraethoxyorthosilicate, the inorganic pigment may be at least one selected from among an acetic acid aqueous solution and a partially hydrolyzed inorganic solution including oxide and hydroxide of alkali and alkaline earth metal, and silicon oxide (SiO₂) particles, and the catalyst may be at least one selected from among sulfuric acid, acetic acid and nitric acid.

In addition, the present invention provides a speckled kitchen utensil, comprising: a silicone primer coating layer formed on a surface of the kitchen utensil and comprising a silicone resin, a color pigment, a bulking agent and a catalyst; a color coating layer formed by spot spraying on an entire surface of the silicone primer coating layer; and a silicone top coating layer formed on a surface of the color coating layer and comprising a silicone resin, a color pigment, a bulking agent, and a catalyst, wherein the silicone primer coating layer and the silicone top coating layer comprise 35 ∼ 80 wt% of the silicone resin, 19 ∼ 60 wt% of the bulking agent, 0.1 ∼ 9.9 wt% of the color pigment, and 0.001 ∼ 0.1 wt% of the catalyst, and a coating solution of the color coating layer is a silicone-based hot paint comprising 96.2 ∼ 98.49 wt% of a silicone resin, 1.5 ∼ 3.5 wt% of a color pigment, and 0.01 ∼ 0.3 wt% of a solvent.

In the present invention, the silicone resin may be polydimethylsilicone or polymethylphenylsilicone, the bulking agent may be at least one selected from among titanium oxide, alumina, tourmaline and feldspar, the catalyst may be a platinum-based polymerization catalyst, and the color pigment may be at least one selected from among ultramarine blue, mica and carbon black.

In the present invention, the color coating layer may be formed by simultaneously or individually spraying coating solutions having different colors through spot spraying at low pressure to exhibit speckled colors.

In the present invention, the color coating layer may be formed by spot spraying at a low pressure of 0.2 ∼ 0.4 MP.

In the present invention, the color coating layer may comprise at least one layer, and each color coating layer may be formed by applying coating solutions having different colors.

Also, the present invention provides a method of manufacturing a speckled kitchen utensil, comprising: subjecting a surface of a utensil to be coated to sand blasting to increase a surface area thereof; washing the surface of the utensil; applying a primer coating solution to a thickness of 10 ∼ 12 µm on the surface of the utensil to form a primer coating layer which is then dried at 100 ∼ 200°C; subjecting an entire surface of the primer coating layer to spot spraying at low pressure using a color coating solution, thus forming a color coating layer; and performing thermal treatment at 400 ∼ 410°C.

In addition, the present invention provides a method of manufacturing a speckled kitchen utensil, comprising: subjecting a surface of a utensil to be coated to sand blasting to increase a surface area thereof; washing the surface of the utensil; applying a primer coating solution to a thickness of 10 ∼ 12 µm on the surface of the utensil to form a primer coating layer which is then dried at 100 ∼ 200°C; subjecting an entire surface of the primer coating layer to spot spraying at low pressure using a color coating solution, thus forming a color coating layer; applying a top coating solution to a thickness of 8 ∼ 12 µm on the color coating layer and then performing drying at 100 ∼ 200°C, thus forming a top coating layer; and performing thermal treatment at 400 ∼ 410°C.

In addition, the present invention provides a method of manufacturing a speckled kitchen utensil, comprising: subjecting a surface of a utensil to be coated to sand blasting to increase a surface area thereof; washing the surface of the utensil; applying a primer coating solution to a thickness of 10 ∼ 12 µm on the surface of the utensil to form a primer coating layer which is then dried at 100 ∼ 200°C; applying a mid coating solution to a thickness of 10 ∼ 12 µm on the primer coating layer, thus forming a mid coating layer; subjecting an entire surface of the mid coating layer to spot spraying at low pressure using a color coating solution, thus forming a color coating layer; and performing thermal treatment at 400 ∼ 410°C.

In addition, the present invention provides a method of manufacturing a speckled kitchen utensil, comprising: subjecting a surface of a utensil to be coated to sand blasting to increase a surface area thereof; washing the surface of the utensil; applying a ceramic primer coating solution to a thickness of 10 ∼ 12 µm on the surface of the utensil to form a ceramic primer coating layer which is then dried at 100 ∼ 200°C; subjecting an entire surface of the ceramic primer coating layer to spot spraying at low pressure using a color coating solution, thus forming a color coating layer; applying a ceramic top coating solution to a thickness of 10 ∼ 12 µm on a surface of the color coating layer to form a ceramic top coating layer which is then dried at 100 ∼ 200°C; and thermally treating the utensil having the ceramic primer coating layer, the color coating layer, and the ceramic top coating layer at 250 ∼ 300°C.

In addition, the present invention provides a method of manufacturing a speckled kitchen utensil, comprising: subjecting a surface of a utensil to be coated to sand blasting to increase a surface area thereof; washing the surface of the utensil; applying a silicone primer coating solution to a thickness of 10 ∼ 12 µm on the surface of the utensil to form a silicone primer coating layer which is then dried at 100 ∼ 200°C; subjecting an entire surface of the silicone primer coating layer to spot spraying at low pressure using a color coating solution, thus forming a color coating layer; forming a silicone top coating layer on the color coating layer; and thermally treating the utensil having the silicone primer coating layer, the color coating layer, and the silicone top coating layer at 250 ∼ 300°C.

In the present invention, the color coating layer may be formed by simultaneously or individually spraying coating solutions having different colors through spot spraying at low pressure to exhibit speckled colors.

In the present invention, the color coating layer may be formed by spot spraying at a low pressure of 0.2 ∼ 0.4 MP.

In the present invention, the color coating layer may comprise at least one layer, and each color coating layer may be formed by applying coating solutions having different colors.

According to the present invention regarding a speckled kitchen utensil and a manufacturing method thereof, the surface of any one selected from among a primer coating layer, a mid coating layer and a top coating layer which are selectively provided on the surface of the kitchen utensil can be formed with a speckled color coating using spot spraying at low pressure, and thus the coating thickness can be set in the range of 20 ∼ 150 µm while minimizing droplet scattering loss of the color coating solution through low-pressure spraying.

Also according to the present invention, a plurality of color coating layers can be formed on the surface of the kitchen utensil, and respective color coating layers can be formed by applying coating solutions having different colors or by performing spot spraying at low pressure using coating solutions having different colors, so that a single color or multiple colors can be exhibited, thus improving the outer appearance of the kitchen utensil.

### BRIEF DESCRIPTION OF THE DRAWINGS

The above and other objects, features and advantages of the present invention will be more cleanly understood from the following detailed description taken in conjunction with the accompanying drawings, in which:
FIG. 1 is a view illustrating a conventional cooking utensil;
FIG. 2 is a cross-sectional view illustrating a speckled kitchen utensil according to a first embodiment of the present invention;
FIG. 3 is a cross-sectional view illustrating a speckled kitchen utensil according to a second embodiment of the present invention;
FIG. 4 is a cross-sectional view illustrating a speckled kitchen utensil according to a third embodiment of the present invention;
FIG. 5 is a cross-sectional view illustrating a speckled kitchen utensil according to a fourth embodiment of the present invention; and
FIG. 6 is a cross-sectional view illustrating a speckled kitchen utensil according to a sixth embodiment of the present invention.

### DESCRIPTION OF SPECIFIC EMBODIMENTS

Hereinafter, a detailed description will be given of preferred embodiments of the present invention with reference to the appended drawings.

Throughout the drawings, the same reference numerals refer to the same elements or components. In the following description, it is noted that, when the detailed description of known techniques related with the present invention may make the gist of the present invention unclear, a detailed description thereof will be omitted.

As used herein, the terms "about", "substantially", etc. are used to mean ones close to the acceptable errors or the numerical values, and these terms are used to intend to prevent the disclosure including the exact or absolute numerical values proposed for the better understanding of the present invention from being unduly used by unconscientious infringers.

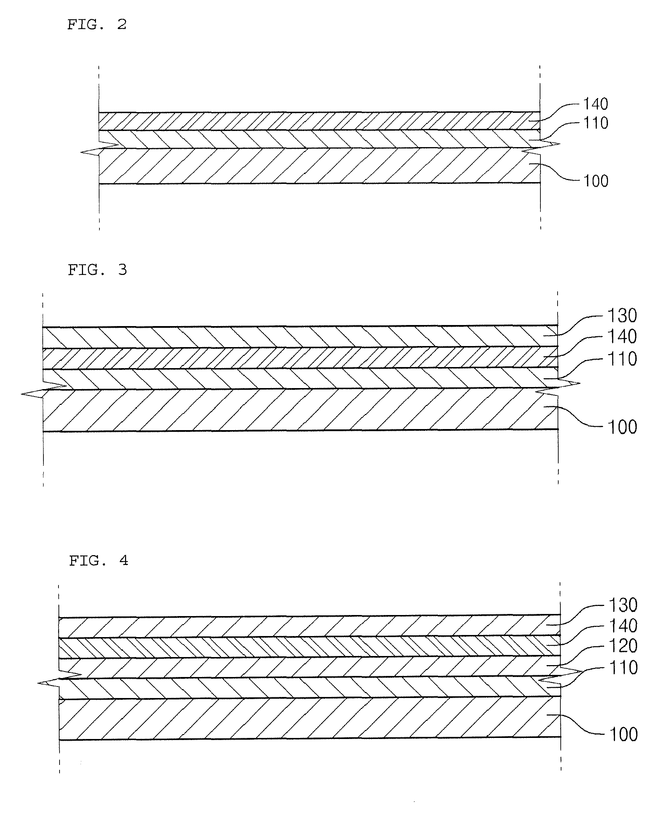

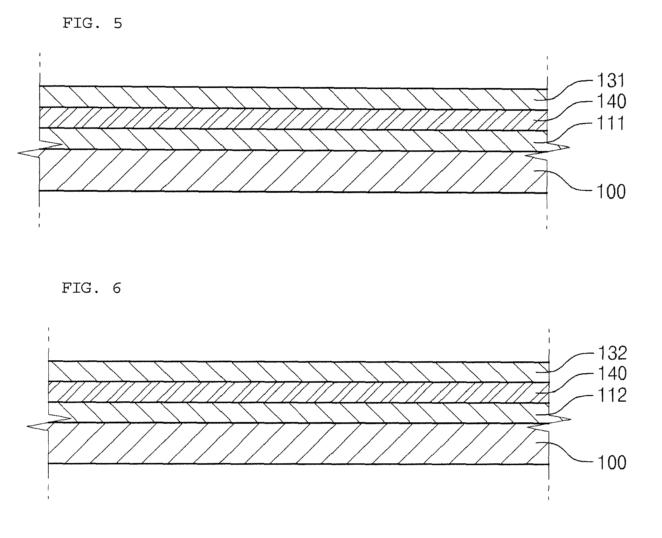

FIG. 2 is a cross-sectional view illustrating a speckled kitchen utensil according to a first embodiment of the present invention, FIG. 3 is a cross-sectional view illustrating a speckled kitchen utensil according to a second embodiment of the present invention, FIG. 4 is a cross-sectional view illustrating a speckled kitchen utensil according to a third embodiment of the present invention, FIG. 5 is a cross-sectional view illustrating a speckled kitchen utensil according to a fourth embodiment of the present invention, and FIG. 6 is a cross-sectional view illustrating a speckled kitchen utensil according to a sixth embodiment of the present invention.

According to the present invention, the speckled kitchen utensil may be manufactured by selectively applying a primer coating layer 110, a mid coating layer 120 and a top coating layer 130 on the surface of a kitchen utensil 100.

In the first embodiment, the surface of the kitchen utensil 100 is sequentially coated with the primer coating layer 110 and the color coating layer 140; in the second embodiment, the primer coating layer 110, the color coating layer 140 and the top coating layer 130 are sequentially applied; and in the third embodiment, the primer coating layer 110, the mid coating layer 120, the color coating layer 140 and the top coating layer 130 are sequentially applied.

In the first embodiment, the surface of the kitchen utensil 100 is coated with the primer coating layer 110 comprising polyamideimide in NMP, water, a PTFE dispersion, a carbon black dispersion and a silica dispersion, and the color coating layer 140 is formed on the entire surface of the primer coating layer 110 by spot spraying.

Specifically, the surface of the kitchen utensil is coated with the primer coating layer 110 comprising polyamide in NMP, water, a PTFE dispersion, a carbon black dispersion and a silica dispersion, and then dried, after which at least one color coating layer 140 is formed on the entire surface of the primer coating layer 110 by spot spraying at low pressure.

The coating solution of the primer coating layer includes 63 ∼ 74 wt% of polyamideimide in NMP, 3 ∼ 8 wt% of water, 14 ∼ 20 wt% of the PTFE dispersion, 2 ∼ 4 wt% of the carbon black dispersion, and 6 ∼ 10 wt% of the silica dispersion.

The coating solution of the color coating layer 140 includes 86 - 92 wt% of a PTFE dispersion, 5 ∼ 7 wt% of water, 0.5 - 1.5 wt% of an aromatic hydrocarbon, 0.2 ∼ 0.5 wt% of triethylamine, 0.2 ∼ 0.5 wt% of oleic acid, 0.1 ∼ 0.4 wt% of a surfactant, and 1.5 ∼ 3.5 wt% of an inorganic pigment.

As for the color coating layer 140, various colors may be exhibited at once by simultaneous spot spraying at low pressure using a plurality of nozzles having different colors.

The color coating layer 140 may include one or more layers, and respective color coating layers may be formed by applying coating solutions having different colors.

Specifically, a color coating layer 140 having a single color may be formed and then coating layers having different colors may be formed thereon.

The manufacturing method according to the first embodiment is described below.

The surface of the utensil 10 is subjected to sand blasting to form fine embossments, thus enlarging the surface area thereof.

Then, the surface of the utensil 10 subjected to sand blasting is cleanly washed.

The primer coating solution is applied to a thickness of 10 - 12 µm on the surface of the utensil to form the primer coating layer 110 which is then dried at 100 ∼ 200°C for 15 min.

Then, the entire surface of the primer coating layer 110 is subjected to spot spraying at low pressure using a color coating solution to form the color coating layer 140, followed by thermally treating the utensil at 400 ∼ 410°C for 15 min.

As such, the drying temperature is set considering the processability and the processing time. When the drying is performed for a period of time shorter than 10 min, it is difficult to uniformly coat the cooking utensil upon secondary coating due to the deficient drying time.

If the drying time exceeds 20 min, the processing time may be undesirably prolonged.

Upon thermal treatment, drying is conducted at 400 ∼ 410°C for 15 min. When the drying is performed at a temperature higher than the above thermal treatment temperature, coating efficiency may increase. If the thermal treatment temperature is lower than 400°C, it may become similar to the drying temperature, making it difficult to densely apply the coating solution.

The color coating layer 140 may include one or more layers, and respective color coating layers 140 may be formed by applying coating solutions having different colors.

Alternatively, spot spraying at low pressure using coating solutions having different colors may be carried out.

The color coating layer 140 may be formed in the thickness range of 20 ∼ 150 µm through spot spraying at a low pressure of 0.2 ∼ 0.4 MP while minimizing droplet scattering loss of the color coating solution.

With reference to FIG. 3, the second embodiment is described below.

The surface of the kitchen utensil is coated with a primer coating layer 110 comprising polyamideimide in NMP, water, a PTFE dispersion, a carbon black dispersion and a silica dispersion, and the entire surface of the primer coating layer 110 is subjected to spot spraying to form a color coating layer 140, and the surface of the color coating layer 140 is coated with a top coating layer 130 comprising a PTFE dispersion, water, an aromatic hydrocarbon, triethylamine, oleic acid, a surfactant and mica.

The coating solution of the primer coating layer 110 includes 63 ∼ 74 wt% of polyamideimide in NMP, 3 ∼ 8 wt% of water, 14 ∼ 20 wt% of the PTFE dispersion, 2 ∼ 4 wt% of the carbon black dispersion, and 6 ∼ 10 wt% of the silica dispersion.

The coating solution of the color coating layer 140 includes 86 - 92 wt% of a PTFE dispersion, 5 ∼ 7 wt% of water, 0.5 ∼ 1.5 wt% of an aromatic hydrocarbon, 0.2 ∼ 0.5 wt% of triethylamine, 0.2 ∼ 0.5 wt% of oleic acid, 0.1 ∼ 0.4 wt% of a surfactant, and 1.5 ∼ 3.5 wt% of an inorganic pigment.

The coating solution of the top coating layer 130 includes 86 ∼ 92 wt% of the PTFE dispersion, 5 ∼ 7 wt% of water, 0.5 ∼ 1.5 wt% of the aromatic hydrocarbon, 0.2 ∼ 0.5 wt% of triethylamine, 0.2 ∼ 0.5 wt% of oleic acid, 0.1 ∼ 0.4 wt% of the surfactant, and 1.5 - 3.5 wt% of mica.

As for the color coating layer 140, various colors may be exhibited at once by simultaneous spot spraying at low pressure using a plurality of nozzles having different colors.

The color coating layer 140 may include one or more layers, and respective color coating layers 140 may be formed by applying coating solutions having different colors.

Specifically, a color coating layer 140 having a single color is formed and then coating layers 140 having different colors may be formed thereon.

Below is a description of the manufacturing method according to the second embodiment.

The surface of the utensil 10 is subjected to sand blasting to form fine embossments, thus enlarging the surface area thereof.

Then, the surface of the utensil 10 subjected to sand blasting is cleanly washed.

The primer coating solution is applied to a thickness of 10 ∼ 12 µm on the surface of the utensil to form the primer coating layer 110 which is then dried at 100 ∼ 200°C for 15 min.

The entire surface of the primer coating layer 110 is subjected to spot spraying at low pressure using a color coating solution, thus forming the color coating layer 140.

On the color coating layer 140, a top coating solution is applied to a thickness of 8 ∼ 12 µm and then dried at 100 ∼ 200°C for 15 min, thus forming the top coating layer 130, after which the utensil is thermally treated at 400 ∼ 410°C for 15 min.

The drying temperature is set considering the processability and the processing time. When the drying is carried out for a period of time shorter than 10 min, it is difficult to uniformly coat the cooking utensil upon secondary coating due to the deficient drying time.

If the drying time is longer than 20 min, the processing time may be undesirably prolonged.

Upon thermal treatment, drying is performed at 400 ∼ 410°C for 15 min. When the drying is performed at a temperature higher than the above thermal treatment temperature, coating efficiency may increase. If the thermal treatment temperature is lower than 400°C, it may become similar to the drying temperature, making it difficult to densely apply the coating solution.

The color coating layer 140 may include one or more layers, and respective color coating layers 140 may be formed by applying coating solutions having different colors.

Alternatively, spot spraying at low pressure using coating solutions having different colors may be carried out.

The color coating layer 140 may be formed in the thickness range of 20 ∼ 150 µm through spot spraying at a low pressure of 0.2 ∼ 0.4 MP while minimizing droplet scattering loss of the color coating solution.

With reference to FIG. 4, the third embodiment is described below.

On the surface of a kitchen utensil, a primer coating layer 110 comprising polyamideimide in NMP, water, a PTFE dispersion, a carbon black dispersion and a silica dispersion is formed, and provided on the surface of the primer coating layer 110 is a mid coating layer 120 comprising a PTFE dispersion, water, an aromatic hydrocarbon, triethylamine, oleic acid, a surfactant, a carbon black dispersion and mica. Further, the entire surface of the mid coating layer is subjected to spot spraying to form a color coating layer 140, and the surface of the color coating layer is coated with a top coating layer 130 comprising a PTFE dispersion, water, an aromatic hydrocarbon, triethylamine, oleic acid, a surfactant and mica.

The coating solution of the primer coating layer 110 includes 63 ∼ 74 wt% of polyamideimide in NMP, 3 ∼ 8 wt% of water, 14 ∼ 20 wt% of the PTFE dispersion, 2 ∼ 4 wt% of the carbon black dispersion, and 6 ∼ 10 wt% of the silica dispersion.

The coating solution of the mid coating layer 120 includes 78 ∼ 86 wt% of the PTFE dispersion, 8 ∼ 15 wt% of water, 2.2 ∼ 4.4 wt% of the aromatic hydrocarbon, 0.3 ∼ 0.6 wt% of triethylamine, 0.3 ∼ 0.6 wt% of oleic acid, 0.2 ∼ 0.4 wt% of the surfactant, 2 ∼ 4 wt% of the carbon black dispersion, and 1 ∼ 2 wt% of mica.

The coating solution of the color coating layer 140 includes 86 - 92 wt% of a PTFE dispersion, 5 ∼ 7 wt% of water, 0.5 - 1.5 wt% of an aromatic hydrocarbon, 0.2 ∼ 0.5 wt% of triethylamine, 0.2 ∼ 0.5 wt% of oleic acid, 0.1 ∼ 0.4 wt% of a surfactant, and 1.5 ∼ 3.5 wt% of an inorganic pigment.

The coating solution of the top coating layer 130 includes 86 ∼ 92 wt% of the PTFE dispersion, 5 ∼ 7 wt% of water, 0.5 ∼ 1.5 wt% of the aromatic hydrocarbon, 0.2 - 0.5 wt% of triethylamine, 0.2 - 0.5 wt% of oleic acid, 0.1 - 0.4 wt% of the surfactant, and 1.5 - 3.5 wt% of mica.

As for the color coating layer 140, various colors may be exhibited at once by simultaneous spot spraying at low pressure using a plurality of nozzles having different colors.

The color coating layer 140 may include one or more layers, and respective color coating layers may be formed by applying coating solutions having different colors.

Specifically, a color coating layer 140 having a single color is formed and then coating layers having different colors may be formed thereon.

Below is a description of the manufacturing method according to the third embodiment.

The surface of the utensil 10 is subjected to sand blasting to form fine embossments, thus enlarging the surface area thereof.

Then, the surface of the utensil 10 subjected to sand blasting is cleanly washed.

The primer coating solution is applied to a thickness of 10 ∼ 12 µm on the surface of the utensil to form the primer coating layer 110 which is then dried at 100 ∼ 200°C for 15 min.

The mid coating solution is applied to a thickness of 10 ∼ 12 µm on the primer coating layer 110, thus forming the mid coating layer 120.

The entire surface of the mid coating layer 120 is subjected to spot spraying at low pressure using a color coating solution, thus forming the color coating layer 140, followed by thermally treating the utensil at 400 ∼ 410°C for 15 min.

The drying temperature is set considering the processability and the processing time. If the drying time is less than 10 min, it is difficult to uniformly coat the cooking utensil upon secondary coating due to the deficient drying time.

In contrast, if the drying time is longer than 20 min, the processing time may be undesirably prolonged.

Upon thermal treatment, drying is performed at 400 ∼ 410°C for 15 min. When the drying is performed at a temperature higher than the above thermal treatment temperature, coating efficiency may increase. If the thermal treatment temperature is lower than 400°C, it may become similar to the drying temperature, making it difficult to densely apply the coating solution.

The color coating layer 140 may include one or more layers, and respective color coating layers 140 may be provided by applying coating solutions having different colors.

Alternatively, spot spraying at low pressure using coating solutions having different colors may be carried out.

The color coating layer 140 may be formed in the thickness range of 20 ∼ 150 µm through spot spraying at a low pressure of 0.2 ∼ 0.4 MP while minimizing droplet scattering loss of the color coating solution.

In the fourth embodiment as illustrated in FIG. 5, the surface of a kitchen utensil is coated with a ceramic primer coating layer 111 comprising a silane-based binder and a catalyst, and the entire surface of the ceramic primer coating layer 111 is subjected to spot spraying to form a color coating layer 140. The surface of the color coating layer 140 is coated with a ceramic top coating layer 131 comprising a silane-based binder, a catalyst and an inorganic pigment dispersion.

The ceramic primer coating layer 111 is composed of 97 ∼ 99.99 wt% of the silane-based binder and 0.01 ∼ 3 wt% of the catalyst.

The coating solution of the color coating layer 140 may be a silane-based hot paint comprising 96.2 ∼ 98.49 wt% of a silane-based binder, 1.5 ∼ 3.5 wt% of a color pigment and 0.01 ∼ 0.3 wt% of a solvent.

The ceramic top coating layer 131 comprises 40 - 90 wt% of the silane-based binder, 9 ∼ 40 wt% of the catalyst, and 1 ∼ 20 wt% of the inorganic pigment dispersion.

The silane-based binder, which is used for the ceramic primer coating layer 111, the color coating layer 140 and the ceramic top coating layer 131, may be at least one selected from among trimethoxysilane, methyltrimethoxysilane and tetraethoxyorthosilicate.

The inorganic pigment used for the ceramic top coating layer 131 may be at least one selected from among an acetic acid aqueous solution and a partially hydrolyzed inorganic solution including oxide and hydroxide of alkali and alkaline earth metals, and silicon oxide (SiO₂) particles.

The catalyst used for the ceramic primer coating layer 111 and the ceramic top coating layer 131 may be at least one selected from among sulfuric acid, acetic acid and nitric acid.

Below is a description of the manufacturing method according to the fourth embodiment.

The surface of the utensil 10 is subjected to sand blasting to form fine embossments, thus enlarging the surface area thereof.

Then, the surface of the utensil 10 subjected to sand blasting is cleanly washed.

The ceramic primer coating solution is applied to a thickness of 10 ∼ 12 µm on the surface of the utensil to form the ceramic primer coating layer 111 which is then dried at 100 ∼ 200°C for 15 min.

Then, the entire surface of the ceramic primer coating layer 111 is subjected to spot spraying at low pressure using a color coating solution, thus forming the color coating layer 140.

The ceramic top coating solution is applied to a thickness of 10 ∼ 12 µm on the surface of the color coating layer 140 to form the ceramic top coating layer 131, which is then dried at 100 ∼ 200°C for 15 min, followed by thermally treating the utensil having the ceramic primer coating layer 111, the color coating layer 140 and the ceramic top coating layer 131 at 250 ∼ 300°C for 15 min.

The drying temperature is set considering the processability and the processing time. If the drying time is less than 10 min, it is difficult to uniformly coat the kitchen utensil upon secondary coating due to the deficient drying time.

In contrast, if the drying time is longer than 20 min, the processing time may be undesirably prolonged.

Upon thermal treatment, drying is performed at 250 ∼ 300°C for 15 min. When the drying is carried out at a temperature higher than the above thermal treatment temperature, coating efficiency may increase. If the thermal treatment temperature is lower than 250°C, it may become similar to the drying temperature, making it difficult to densely apply the coating solution.

The color coating layer 140 may include one or more layers, and respective color coating layers 140 may be formed by applying coating solutions having different colors.

Alternatively, spot spraying at low pressure using coating solutions having different colors may be carried out.

Useful for the color coating layer 140, coating solutions having different colors may be simultaneously or individually sprayed through spot spraying at low pressure, thus exhibiting a variety of speckled colors.

The color coating layer 140 may be formed in the thickness range of 20 ∼ 150 µm through spot spraying at a low pressure of 0.2 ∼ 0.4 MP while minimizing droplet scattering loss of the color coating solution.

In the fifth embodiment as illustrated in FIG. 6, the surface of a kitchen utensil is coated with a silicone primer coating layer 112 comprising a silicone resin, a color pigment, a bulking agent and a catalyst, and the entire surface of the silicone primer coating layer is subjected to spot spraying to form a color coating layer 140. Furthermore, the surface of the color coating layer is coated with a silicone top coating layer 132 comprising a silicone resin, a color pigment, a bulking agent and a catalyst.

The silicone primer coating layer 112 and the silicone top coating layer 132 may comprise 35 ∼ 80 wt% of the silicone resin, 19 ∼ 60 wt% of the bulking agent, 0.1 ∼ 9.9 wt% of the color pigment, and 0.001 ∼ 0.1 wt% of the catalyst.

The coating solution of the color coating layer 140 is a silicone-based hot paint comprising 96.2 ∼ 98.49 wt% of a silicone resin, 1.5 ∼ 3.5 wt% of a color pigment, and 0.01 ∼ 0.3 wt% of a solvent.

The silicone resin may be either polydimethylsilicone or polymethylphenylsilicone.

The bulking agent may be at least one selected from among titanium oxide, alumina, tourmaline and feldspar.

The catalyst may be a platinum-based polymerization catalyst.

The color pigment used for the silicone primer coating layer 112 and the silicone top coating layer 132 may be at least one selected from among ultramarine blue, mica and carbon black.

Useful for the color coating layer 140, coating solutions having different colors may be simultaneously or individually sprayed through spot spraying at low pressure, thus exhibiting a variety of speckled colors.

The color coating layer 140 may include one or more layers, and respective color coating layers 140 may be formed by applying coating solutions having different colors.

Alternatively, spot spraying at low pressure using coating solutions having different colors may be conducted.

The color coating layer 140 may be formed in the thickness range of 20 ∼ 150 µm through spot spraying at a low pressure of 0.2 ∼ 0.4 MP while minimizing droplet scattering loss of the color coating solution.

Below is a description of the manufacturing method according to the fifth embodiment.

The surface of the utensil 10 is subjected to sand blasting to form fine embossments, thus enlarging the surface area thereof.

Then, the surface of the utensil 10 subjected to sand blasting is cleanly washed.

The silicone primer coating solution is applied to a thickness of 10 ∼ 12 µm on the surface of the utensil to form the silicon primer coating layer 112 which is then dried at 100 ∼ 200°C for 15 min.

The entire surface of the silicone primer coating layer 112 is subjected to spot spraying at low pressure using a color coating solution, thus forming the color coating layer 140.

Then, the silicone primer coating solution is applied to a thickness of 10 ∼ 12 µm on the surface of the color coating layer 140 to form the silicone top coating layer 132, which is then dried at 100 ∼ 200°C for 15 min, followed by thermally treating the utensil having the silicone primer coating layer 112, the color coating layer 140 and the silicone top coating layer 132 at 250 ∼ 300°C for 15 min.

The drying temperature is set considering the processability and the processing time. If the drying time is less than 10 min, it is difficult to uniformly coat the cooking utensil upon secondary coating due to the deficient drying time.

In contrast, if the drying time is longer than 20 min, the processing time may be undesirably prolonged.

Upon thermal treatment, drying is performed at 250 ∼ 300°C for 15 min. When the drying is performed at a temperature higher than the above thermal treatment temperature, coating efficiency may increase. If the thermal treatment temperature is lower than 250°C, it may become similar to the drying temperature, making it difficult to densely apply the coating solution.

The color coating layer 140 may include one or more layers, and respective color coating layers 140 may be provided by applying coating solutions having different colors.

Alternatively, spot spraying at low pressure using coating solutions having different colors may be carried out.

Useful for the color coating layer 140, coating solutions having different colors may be simultaneously or individually sprayed through spot spraying at low pressure, thus exhibiting a variety of speckled colors.

In the first to the fifth embodiment, the plurality of color coating layers 140 may be provided, and respective color coating layers may be formed by applying coating solutions having different colors.

Alternatively, spot spraying at low pressure using coating solutions having different colors may be performed, giving a speckled kitchen utensil 100.

In the speckled kitchen utensil and the manufacturing method thereof according to the present invention, the color coating layer 140 may be applied through spot spraying at low pressure on the surface of any one selected from among individual coating layers, wherein the coating thickness thereof may be set in the range of 20 ∼ 150 µm while minimizing droplet scattering loss of the color coating solution.

The plurality of color coating layers 140 which are provided on the surface of the kitchen utensil 100 may be formed by applying coating solutions having different colors, or by carrying out spot spraying at low pressure using coating solutions having different colors, so that a single color or multiple colors may be exhibited, thereby improving the outer appearance of the kitchen utensil 100.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A speckled kitchen utensil, comprising:
a primer coating layer formed on a surface of the kitchen utensil and comprising polyamideimide in NMP, water, a PTFE dispersion, a carbon black dispersion, and a silica dispersion; and
a color coating layer formed by spot spraying on an entire surface of the primer coating layer,
wherein a coating solution of the primer coating layer comprises 63 ∼ 74 wt% of polyamideimide in NMP, 3 ∼ 8 wt% of water, 14 ∼ 20 wt% of the PTFE dispersion, 2 ∼ 4 wt% of the carbon black dispersion, and 6 ∼ 10 wt% of the silica dispersion, and
a coating solution of the color coating layer comprises 86 - 92 wt% of a PTFE dispersion, 5 ∼ 7 wt% of water, 0.5 ∼ 1.5 wt% of an aromatic hydrocarbon, 0.2 ∼ 0.5 wt% of triethylamine, 0.2 ∼ 0.5 wt% of oleic acid, 0.1 ∼ 0.4 wt% of a surfactant, and 1.5 ∼ 3.5 wt% of an inorganic pigment.

2. A speckled kitchen utensil, comprising:
a primer coating layer formed on a surface of the kitchen utensil and comprising polyamideimide in NMP, water, a PTFE dispersion, a carbon black dispersion, and a silica dispersion;
a color coating layer formed by spot spraying on an entire surface of the primer coating layer; and
a top coating layer formed on a surface of the color coating layer and comprising a PTFE dispersion, water, an aromatic hydrocarbon, triethylamine, oleic acid, a surfactant, and mica,
wherein a coating solution of the primer coating layer comprises 63 ∼ 74 wt% of polyamideimide in NMP, 3 ∼ 8 wt% of water, 14 ∼ 20 wt% of the PTFE dispersion, 2 ∼ 4 wt% of the carbon black dispersion, and 6 ∼ 10 wt% of the silica dispersion,
a coating solution of the color coating layer comprises 86 - 92 wt% of a PTFE dispersion, 5 ∼ 7 wt% of water, 0.5 ∼ 1.5 wt% of an aromatic hydrocarbon, 0.2 ∼ 0.5 wt% of triethylamine, 0.2 ∼ 0.5 wt% of oleic acid, 0.1 ∼ 0.4 wt% of a surfactant, and 1.5 ∼ 3.5 wt% of an inorganic pigment, and
a coating solution of the top coating layer comprises 86 ∼ 92 wt% of the PTFE dispersion, 5 ∼ 7 wt% of water, 0.5 - 1.5 wt% of the aromatic hydrocarbon, 0.2 - 0.5 wt% of triethylamine, 0.2 - 0.5 wt% of oleic acid, 0.1 ∼ 0.4 wt% of the surfactant, and 1.5 - 3.5 wt% of mica.

3. A speckled kitchen utensil, comprising:
a primer coating layer formed on a surface of the kitchen utensil and comprising polyamideimide in NMP, water, a PTFE dispersion, a carbon black dispersion, and a silica dispersion;
a mid coating layer formed on a surface of the primer coating layer and comprising a PTFE dispersion, water, an aromatic hydrocarbon, triethylamine, oleic acid, a surfactant, a carbon black dispersion, and mica;
a color coating layer formed by spot spraying on an entire surface of the mid coating layer; and
a top coating layer formed on a surface of the color coating layer and comprising a PTFE dispersion, water, an aromatic hydrocarbon, triethylamine, oleic acid, a surfactant, and mica,
wherein a coating solution of the primer coating layer comprises 63 ∼ 74 wt% of polyamideimide in NMP, 3 ∼ 8 wt% of water, 14 ∼ 20 wt% of the PTFE dispersion, 2 ∼ 4 wt% of the carbon black dispersion, and 6 ∼ 10 wt% of the silica dispersion,
a coating solution of the mid coating layer comprises 78 - 86 wt% of the PTFE dispersion, 8 ∼ 15 wt% of water, 2.2 ∼ 4.4 wt% of the aromatic hydrocarbon, 0.3 - 0.6 wt% of triethylamine, 0.3 ∼ 0.6 wt% of oleic acid, 0.2 ∼ 0.4 wt% of the surfactant, 2 ∼ 4 wt% of the carbon black dispersion, and 1 ∼ 2 wt% of mica,
a coating solution of the color coating layer comprises 86 ∼ 92 wt% of a PTFE dispersion, 5 ∼ 7 wt% of water, 0.5 ∼ 1.5 wt% of an aromatic hydrocarbon, 0.2 ∼ 0.5 wt% of triethylamine, 0.2 ∼ 0.5 wt% of oleic acid, 0.1 ∼ 0.4 wt% of a surfactant, and 1.5 ∼ 3.5 wt% of an inorganic pigment, and
a coating solution of the top coating layer comprises 86 ∼ 92 wt% of the PTFE dispersion, 5 ∼ 7 wt% of water, 0.5 ∼ 1.5 wt% of the aromatic hydrocarbon, 0.2 ∼ 0.5 wt% of triethylamine, 0.2 ∼ 0.5 wt% of oleic acid, 0.1 ∼ 0.4 wt% of the surfactant, and 1.5 ∼ 3.5 wt% of mica.

4. The kitchen utensil of any one of claims 1 to 3, wherein the color coating layer exhibits various colors by simultaneous spot spraying at low pressure using a plurality of nozzles having different colors.

5. A speckled kitchen utensil, comprising:
a ceramic primer coating layer formed on a surface of the kitchen utensil and comprising a silane-based binder and a catalyst;
a color coating layer formed by spot spraying on an entire surface of the ceramic primer coating layer; and
a ceramic top coating layer formed on a surface of the color coating layer and comprising a silane-based binder, a catalyst, and an inorganic pigment dispersion,
wherein the ceramic primer coating layer comprises 97 ∼ 99.99 wt% of the silane-based binder, and 0.01 ∼ 3 wt% of the catalyst,
a coating solution of the color coating layer is a silane-based hot paint comprising 96.2 ∼ 98.49 wt% of a silane-based binder, 1.5 ∼ 3.5 wt% of a color pigment, and 0.01 ∼ 0.3 wt% of a solvent, and
the ceramic top coating layer comprises 40 ∼ 90 wt% of the silane-based binder, 9 ∼ 40 wt% of the catalyst, and 1 ∼ 20 wt% of the inorganic pigment dispersion.

6. The kitchen utensil of claim 5, wherein the silane-based binder is at least one selected from among trimethoxysilane, methyltrimethoxysilane, and tetraethoxyorthosilicate,
the inorganic pigment is at least one selected from among an acetic acid aqueous solution and a partially hydrolyzed inorganic solution including oxide and hydroxide of alkali and alkaline earth metal, and silicon oxide (SiO₂) particles, and
the catalyst is at least one selected from among sulfuric acid, acetic acid and nitric acid.

7. A speckled kitchen utensil, comprising:
a silicone primer coating layer formed on a surface of the kitchen utensil and comprising a silicone resin, a color pigment, a bulking agent and a catalyst;
a color coating layer formed by spot spraying on an entire surface of the silicone primer coating layer; and
a silicone top coating layer formed on a surface of the color coating layer and comprising a silicone resin, a color pigment, a bulking agent, and a catalyst,
wherein the silicone primer coating layer and the silicone top coating layer comprise 35 ∼ 80 wt% of the silicone resin, 19 ∼ 60 wt% of the bulking agent, 0.1 ∼ 9.9 wt% of the color pigment, and 0.001 ∼ 0.1 wt% of the catalyst, and
a coating solution of the color coating layer is a silicone-based hot paint comprising 96.2 ∼ 98.49 wt% of a silicone resin, 1.5 ∼ 3.5 wt% of a color pigment, and 0.01 ∼ 0.3 wt% of a solvent.

8. The kitchen utensil of claim 7, wherein the silicone resin is polydimethylsilicone or polymethylphenylsilicone,
the bulking agent is at least one selected from among titanium oxide, alumina, tourmaline and feldspar,
the catalyst is a platinum-based polymerization catalyst, and
the color pigment is at least one selected from among ultramarine blue, mica and carbon black.

9. The kitchen utensil of any one of claims 1, 2, 3, 5 and 7, wherein the color coating layer is formed by simultaneously or individually spraying coating solutions having different colors through spot spraying at low pressure to exhibit speckled colors.

10. The kitchen utensil of any one of claims 1, 2, 3, 5 and 7, wherein the color coating layer is formed by spot spraying at a low pressure of 0.2 ∼ 0.4 MP.

11. The kitchen utensil of any one of claims 1, 2, 3, 5 and 7, wherein the color coating layer comprises at least one layer, and each color coating layer is formed by applying coating solutions having different colors.

12. A method of manufacturing a speckled kitchen utensil, comprising:
subjecting a surface of a utensil to be coated to sand blasting to increase a surface area thereof;
washing the surface of the utensil;
applying a primer coating solution to a thickness of 10 ∼ 12 µm on the surface of the utensil to form a primer coating layer which is then dried at 100 ∼ 200°C;
subjecting an entire surface of the primer coating layer to spot spraying at low pressure using a color coating solution, thus forming a color coating layer; and
performing thermal treatment at 400 ∼ 410°C.

13. A method of manufacturing a speckled kitchen utensil, comprising:
subjecting a surface of a utensil to be coated to sand blasting to increase a surface area thereof;
washing the surface of the utensil;
applying a primer coating solution to a thickness of 10 v 12 µm on the surface of the utensil to form a primer coating layer which is then dried at 100 ∼ 200°C;
subjecting an entire surface of the primer coating layer to spot spraying at low pressure using a color coating solution, thus forming a color coating layer;
applying a top coating solution to a thickness of 8 ∼ 12 µm on the color coating layer and then performing drying at 100 ∼ 200°C, thus forming a top coating layer; and
performing thermal treatment at 400 ∼ 410°C.

14. A method of manufacturing a speckled kitchen utensil, comprising:
subjecting a surface of a utensil to be coated to sand blasting to increase a surface area thereof;
washing the surface of the utensil;
applying a primer coating solution to a thickness of 10 ∼ 12 µm on the surface of the utensil to form a primer coating layer which is then dried at 100 ∼ 200°C;
applying a mid coating solution to a thickness of 10 ∼ 12 µm on the primer coating layer, thus forming a mid coating layer;
subjecting an entire surface of the mid coating layer to spot spraying at low pressure using a color coating solution, thus forming a color coating layer; and
performing thermal treatment at 400 ∼ 410°C.

15. A method of manufacturing a speckled kitchen utensil, comprising:
subjecting a surface of a utensil to be coated to sand blasting to increase a surface area thereof;
washing the surface of the utensil;
applying a ceramic primer coating solution to a thickness of 10 ∼ 12 µm on the surface of the utensil to form a ceramic primer coating layer which is then dried at 100 ∼ 200°C;
subjecting an entire surface of the ceramic primer coating layer to spot spraying at low pressure using a color coating solution, thus forming a color coating layer;
applying a ceramic top coating solution to a thickness of 10 ∼ 12 µm on a surface of the color coating layer to form a ceramic top coating layer which is then dried at 100 ∼ 200°C; and
thermally treating the utensil having the ceramic primer coating layer, the color coating layer, and the ceramic top coating layer at 250 ∼ 300°C.

16. A method of manufacturing a speckled kitchen utensil, comprising:
subjecting a surface of a utensil to be coated to sand blasting to increase a surface area thereof;
washing the surface of the utensil;
applying a silicone primer coating solution to a thickness of 10 ∼ 12 µm on the surface of the utensil to form a silicone primer coating layer which is then dried at 100 ∼ 200°C;
subjecting an entire surface of the silicone primer coating layer to spot spraying at low pressure using a color coating solution, thus forming a color coating layer;
forming a silicone top coating layer on the color coating layer; and
thermally treating the utensil having the silicone primer coating layer, the color coating layer, and the silicone top coating layer at 250 ∼ 300°C.

17. The method of any one of claims 12 to 16, wherein the color coating layer is formed by simultaneously or individually spraying coating solutions having different colors through spot spraying at low pressure to exhibit speckled colors.

18. The method of any one of claims 12 to 16, wherein the color coating layer is formed by spot spraying at a low pressure of 0.2 ∼ 0.4 MP.

19. The method of any one of claims 12 to 16, wherein the color coating layer comprises at least one layer, and each color coating layer is formed by applying coating solutions having different colors.
